# EUROPEAN PATENT APPLICATION

(11) **EP 4 307 489 A1**
(43) Date of publication of application: **17.01.2024**
(21) Application number: 21938384.1
(22) Date of filing: 29.04.2021
(51) Int. Cl.: H01R 13/629

(54) **SOCKET WITH PLUG ASSISTANCE FUNCTION, AND VEHICLE AND CHARGING PILE**

(71) Applicant: Geely Automobile Research Institute (Ningbo) Co., Ltd, Ningbo, Zhejiang 315336 (CN); Zhejiang Geely Holding Group Co., Ltd., Hangzhou, Zhejiang 310051 (CN)
(72) Inventor: HE, YingYong, Hangzhou Bay New District Ningbo, Zhejiang 315336 (CN); GUO, Shuibao, Hangzhou Bay New District Ningbo, Zhejiang 315336 (CN); WANG, Wei, Hangzhou Bay New District Ningbo, Zhejiang 315336 (CN); YANG, Kang, Hangzhou Bay New District Ningbo, Zhejiang 315336 (CN); JI, Ke, Hangzhou Bay New District Ningbo, Zhejiang 315336 (CN); WANG, Qiang, Hangzhou Bay New District Ningbo, Zhejiang 315336 (CN); SHI, ZhiChao, Hangzhou Bay New District Ningbo, Zhejiang 315336 (CN)
(74) Representative: Range, Christopher William
(86) International application number: PCT/CN2021/091049
(87) International publication number: WO 2022/226904

(57) **Abstract**

Provided are a socket with plug assistance function, a vehicle, and a charging pile. The socket with the plug assistance function includes a socket body (1), a receiver module, a drive assembly, and a controller. The socket body (1) is a base having a socket inner cavity. The receiver module is configured to receive an entering signal or an exit signal sent by a plug detection sensor (2), an in-position signal sent by an in-position detection sensor (3), and a request signal sent by a request trigger module for a target object (4) to exit the socket inner cavity. The controller is configured to output a corresponding drive and control signal based on a signal sent by the receiver module. The drive assembly is configured to adjust an operation state based on the drive and control signal to drive the target object (4) to enter or exit the socket inner cavity. Each of the receiver module, the drive assembly, and the controller is disposed at the socket body (1), and each of the receiver module and the drive assembly is electrically connected to the controller. In this way, the plug assistance function can also be realized without any modification to the target object (4). As a result, universality is extremely high.

## Description

### FIELD

The present disclosure relates to the field of new energy vehicle technologies, and more particularly, to a socket with plug assistance function, a vehicle, and a charging pile.

### BACKGROUND

With the development of new energy vehicle technologies, new energy vehicles are becoming increasingly popular. It is unavoidable for a user to perform a charging operation in the use of an electric vehicle. Therefore, good charging experience is a common pursuit of electric vehicle manufacturers.

However, with the development of charging technologies, especially high-power charging, charging guns and cables have become increasingly complex and heavier. Therefore, user experience tends to deteriorate, especially during the charging operation, inserting the charging gun into a charging gun socket or a charging gun empty seat and pulling the charging gun out of the charging gun socket or the charging gun empty seat require the user's arms to bear a large load, which especially troubles a female user with a relatively small force. In the technical solution of assisting insertion and pulling of the charging gun provided in the related art, there is a need for optimization in both a structure of the charging gun socket and a structure of the charging gun, resulting in low universality.

### SUMMARY

At present, during charging with a charging gun, a user needs to use a large pulling force or insertion force when pulling or inserting the charging gun, and therefore user experience is poor. However, an existing charging gun socket with plug assistance function needs to be adapted to a charging gun (a non-standard charging gun) with a special structure, and thus is poor in universality.

To this end, a first aspect of the present disclosure provides a socket with plug assistance function. The socket includes a socket body, a receiver module, a drive assembly, and a controller. The socket body is a base having a socket inner cavity. The receiver module is configured to receive an entering signal or an exit signal sent by a plug detection sensor, an in-position signal sent by an in-position detection sensor, and a request signal sent by a request trigger module for a target object to exit the socket inner cavity. The controller is configured to output a corresponding drive and control signal based on a signal sent by the receiver module. The drive assembly is configured to adjust an operation state based on the drive and control signal to drive the target object to enter or exit the socket inner cavity. The plug detection sensor is configured to detect a signal for the target object to enter or exit an open end of the socket inner cavity. The in-position detection sensor is configured to detect a signal for the target object to be inserted to a predetermined position in the socket inner cavity. The request trigger module is configured to receive a request signal for the target object to exit the socket inner cavity. Each of the receiver module, the drive assembly, and the controller is disposed at the socket body, and each of the receiver module and the drive assembly is electrically connected to the controller.

Further, the socket further includes the plug detection sensor disposed at the socket body and electrically and/or communicatively connected to the receiver module.

Further, the plug detection sensor includes an optocoupler sensor disposed at an inner side wall of the socket inner cavity and located close to the open end of the socket inner cavity.

Further, the socket further includes the in-position detection sensor disposed at the socket body and electrically and/or communicatively connected to the receiver module.

Further, the in-position detection sensor includes a contact signal switch disposed at a bottom of the socket inner cavity.

Further, the socket further includes the request trigger module disposed at the socket body and electrically and/or communicatively connected to the receiver module.

Further, the drive assembly includes a drive mechanism and a driver. The drive mechanism is electrically connected to the controller and in transmission connection with the driver through an output shaft. The driver has a first state in which the driver protrudes into the socket inner cavity and a second state in which the driver does not protrude into the socket inner cavity. The driver is configured to be driven by the drive mechanism to be switchable between the first state and the second state.

Further, the socket further includes a mounting through hole formed at a side wall of the socket inner cavity. The driver is totally or partially received in the mounting through hole. The drive mechanism is disposed at an outer side wall of the socket inner cavity.

Further, the drive mechanism includes a pneumatic motor, a hydraulic motor, and an electric motor.

Further, the driver includes a drive cam.

Further, a movement distance of the target object in the socket inner cavity is an integer multiple of a single movement distance of the target object in the first state.

Further, the socket further includes a return detection sensor electrically and/or communicatively connected to the controller and disposed at the socket body or the drive assembly.

Further, the return detection sensor includes a pressure sensor disposed at the output shaft.

Further, the receiver module is further configured to receive a return state detection result sent by the return state detection sensor. The controller is further configured to send a corresponding drive and control signal to the drive mechanism based on the signal sent by the plug detection sensor for the target object to exit the open end of the socket inner cavity, a return state detection request sent by the return detection sensor, and the return state detection result. The drive mechanism is capable of switching the operation state based on the received drive and control signal to adjust the driver into the second state.

Further, the socket includes a plurality of drive assemblies arranged at intervals along a side wall of the socket inner cavity.

A second aspect of the present disclosure provides a vehicle. The vehicle includes a charging socket. The charging socket is the socket according to the first aspect of the present disclosure.

A third aspect of the present disclosure provides a charging pile. The charging pile includes a charging socket. The charging socket is the socket according to the first aspect of the present disclosure.

The socket with the plug assistance function, the vehicle, and the charging pile according to the embodiments of the present disclosure have the following beneficial effects.

1. The socket with the plug assistance function according to the embodiments of the present disclosure can allow, without any modification to the target object (e.g., a national standard charging gun head), the user to drag the target object to be inserted into and exit the socket inner cavity more conveniently and effortlessly. In this way, the function of assisting in insertion and pulling of the target object is realized. As a result, the universality is extremely high.

2. The socket with the plug assistance function according to the embodiments of the present disclosure can assist the target object in being inserted into and pulled out of the socket inner cavity. In a case where a weight of the target object is large and the user's arms need to bear a large load, the target object can be inserted into and exit the socket inner cavity automatically or with a smaller insertion and pulling force, which greatly improves user experience.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1 (a) is a perspective view of a charging gun socket from one observation angle according to an embodiment of the present disclosure.
FIG. 1 (b) is a perspective view of a charging gun socket from another observation angle according to an embodiment of the present disclosure.
FIG. 2 is a schematic view of insertion of a charging gun socket and a charging gun according to an embodiment of the present disclosure.
FIG. 3 is a schematic view of cooperation of a charging gun socket and a charging gun according to an embodiment of the present disclosure.
FIG. 4 (a) is a schematic view of a position of a drive cam in a first state according to an embodiment of the present disclosure.
FIG. 4 (b) is a schematic view of a position of a drive cam in a second state according to an embodiment of the present disclosure.
where: 1-socket body, 2-plug detection sensor, 3-in-position detection sensor, 4-target object, 5-drive mechanism, 6-drive cam, 7-mechanical button, 8-gun-end signal switch.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In the description of the present disclosure, it is to be understood that, terms such as "over", "below", "front", "top", "bottom", "in", "out", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure. In the description of the present disclosure, "a plurality of' means two or more, unless specified otherwise.

In the present disclosure, unless otherwise clearly specified and limited, terms such as "installed", "mounted", "connected", "coupled", "fixed" and the like should be understood in a broad sense. For example, it may be a fixed connection or a detachable connection or connection as one piece; mechanical connection or electrical connection or communication; direct connection or indirect connection through an intermediate; internal communication of two components or the interaction relationship between two components. For those skilled in the art, the specific meanings of the above-mentioned terms in the present disclosure can be understood based on specific circumstances.

### Embodiments

Embodiments of the present disclosure disclose a socket with plug assistance function. The socket may be applied to a plurality of scenarios with plug assistance requirements, such as a vehicle washing water gun and a refueling gun, and the embodiments are not limited thereto. A charging gun socket is taken as an example in the embodiments of the present disclosure for description.

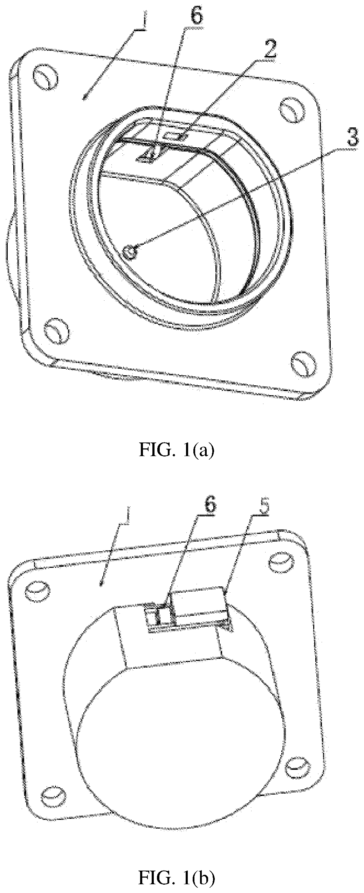

FIG. 1 (a) is a perspective view of a charging gun socket from one observation angle according to an embodiment of the present disclosure, and FIG. 1 (b) is a perspective view of a charging gun socket from another observation angle according to an embodiment of the present disclosure. Specifically, as illustrated in FIG. 1 (a) and FIG. 1 (b), embodiments of the present disclosure provide a socket with plug assistance function. The socket includes a socket body 1, a receiver module, a drive assembly, and a controller. The socket body 1 is a base having a socket inner cavity. The receiver module is configured to receive an entering signal or an exit signal sent by a plug detection sensor 2, an in-position signal sent by an in-position detection sensor 3, and a request signal sent by a request trigger module for a target object 4 to exit the socket inner cavity. The controller is configured to output a corresponding drive and control signal based on a signal sent by the receiver module. The drive assembly is configured to adjust an operation state based on the drive and control signal to drive the target object 4 to enter or exit the socket inner cavity. The plug detection sensor 2 is configured to detect a signal for the target object 4 to enter or exit an open end of the socket inner cavity. The in-position detection sensor 3 is configured to detect a signal for the target object 4 to be inserted to a predetermined position in the socket inner cavity. The request trigger module is configured to receive a request signal for the target object 4 to exit the socket inner cavity. Each of the receiver module, the drive assembly, and the controller is disposed at the socket body 1, and each of the receiver module and the drive assembly is electrically connected to the controller.

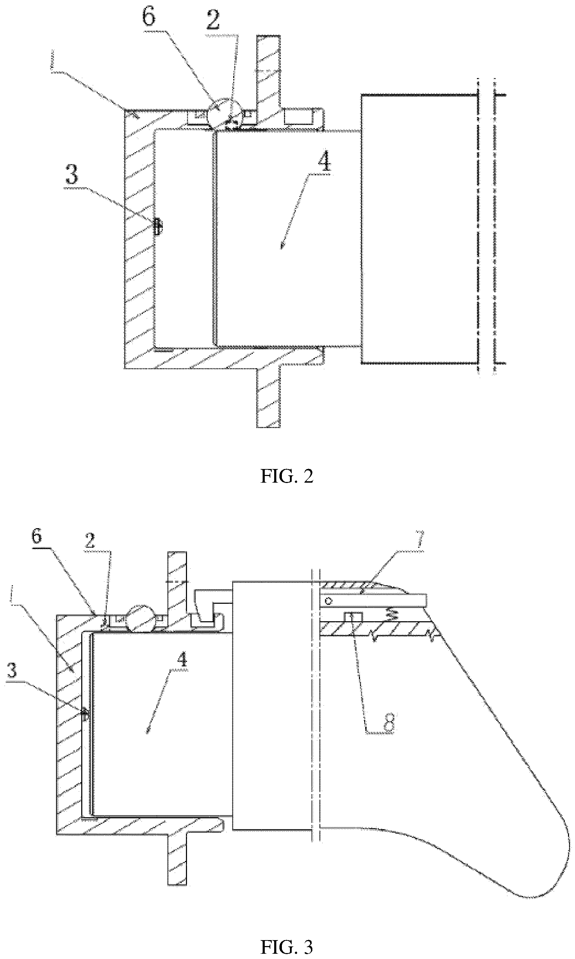

FIG. 2 is a schematic view of insertion of a charging gun socket and a charging gun according to an embodiment of the present disclosure. As illustrated in FIG. 2, when the target object 4 just enters the socket inner cavity, the plug detection sensor 2 is triggered by the target object 4, and an entering signal is sent to the controller by the plug detection sensor 2. The entering signal includes a movement direction of the target object 4, and in this case, the movement direction of the target object 4 is a direction towards a bottom of the socket inner cavity. The drive assembly can be switched from a current state to an operation state in which a force is exerted on the target object 4 in a same direction as the movement direction of the target object 4 under control of the controller. That is, when a charging gun head is inserted into a charging socket inner cavity, the charging socket inner cavity can provide a pulling force to a charging gun to enter the charging socket inner cavity. Therefore, the charging gun is inserted into the charging socket inner cavity automatically or with a smaller inserting force.

Specifically, when the target object 4 just exits the socket inner cavity, an exit signal is sent to the controller by the plug detection sensor 2. The exit signal includes a movement direction of the target object 4, and in this case, the movement direction of the target object 4 is a direction towards an open end of the socket inner cavity. The drive assembly can stop under the control of the controller.

FIG. 3 is a schematic view of cooperation of a charging gun socket and a charging gun according to an embodiment of the present disclosure. As illustrated in FIG. 3, the charging gun head is dragged by the drive assembly to be inserted into the charging socket inner cavity until the charging gun head is inserted in position and the in-position detection sensor 3 is triggered by the charging gun head. In this case, the charging gun is inserted, and the drive assembly stops operating. When the charging gun is inserted in position, the in-position detection sensor 3 located at the bottom of the socket inner cavity is triggered by the charging gun, and the in-position signal is sent to the controller by the in-position detection sensor 3. The drive assembly stops when receiving a corresponding drive and control signal from the controller.

In some embodiments, the plug detection sensor 2 is disposed at the socket body 1 and electrically and/or communicatively connected to the receiver module. For example, the plug detection sensor 2 includes an optocoupler sensor disposed at an inner side wall of the socket inner cavity and located close to the open end of the socket inner cavity. Alternatively, the plug detection sensor 2 may also be disposed in other regions outside the socket body 1. For example, the plug detection sensor 2 may be disposed at the target object 4 (a charging gun body).

In some embodiments, the in-position detection sensor 3 is disposed at the socket body 1 and electrically and/or communicatively connected to the receiver module. For example, the in-position detection sensor 3 includes a contact signal switch disposed at a bottom of the socket inner cavity.

In some embodiments, the request trigger module is disposed at the socket body 1 and electrically and/or communicatively connected to the receiver module.

With continued reference to FIG. 1 (b), in some embodiments, the drive assembly includes a drive mechanism 5 and a driver 6. The drive mechanism 5 is electrically connected to the controller and in transmission connection with the driver 6 through an output shaft. Specifically, the drive mechanism 5 includes, but is not limited to, a pneumatic motor, a hydraulic motor, and an electric motor. The driver 6 has a first state in which the driver 6 protrudes into the socket inner cavity and a second state in which the driver 6 does not protrude into the socket inner cavity. The driver 6 is configured to be driven by the drive mechanism 5 to be switchable between the first state and the second state. Specifically, the driver 6 includes, but is not limited to, a drive cam, a rack, or the like.

With continued reference to FIG. 1 (a) and FIG. 1 (b), a mounting through hole is formed at a side wall of the socket inner cavity. The driver 6 is totally or partially received in the mounting through hole. The driver 6 may be a drive cam illustrated in FIG. 2, and the illustrated drive cam 6 is axially perpendicular to the socket inner cavity. The drive mechanism 5 is disposed at an outer side wall of the socket inner cavity and adjacent to the mounting through hole. The output shaft of the drive mechanism 5 is disposed outside the mounting through hole. The output shaft of the drive mechanism 5 is perpendicular to an axial direction of the socket inner cavity. The driver 6 may also be of other types. Correspondingly, a connection relation between the driver 6 and the drive mechanism 5 as well as the socket inner cavity may be set as desired.

In some embodiments, a movement distance of the target object 4 in the socket inner cavity is an integer multiple of a single movement distance of the target object 4 in the first state.

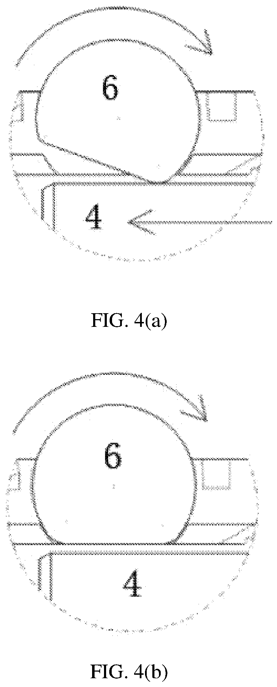

FIG. 4 (a) is a schematic view of a position of a drive cam in a first state according to an embodiment of the present disclosure, and FIG. 4 (b) is a schematic view of a position of a drive cam in a second state according to an embodiment of the present disclosure. Specifically, as illustrated in FIG. 4 (a) and FIG. 4 (b), the drive cam protrudes into the socket inner cavity in the first state, and the drive cam is in contact with a charging gun inserted into the socket inner cavity to drive the charging gun to move towards the bottom of the socket inner cavity. The drive cam 6 does not protrude into the socket inner cavity in the second state.

When a user needs to pull out the charging gun, the user presses a mechanical button 7 of the charging gun to trigger the request trigger module. The request trigger module herein may be a gun end signal switch 8. A drive cam 2 is driven by the drive mechanism 5 to rotate reversely to withdraw a charging gun head 6 until the optocoupler sensor 3 is triggered by the charging gun head 6 again. In this case, the drive cam returns into the second state illustrated in FIG. 4 (b).

In practical application, when the charging gun exits the socket inner cavity, there is also a case where the drive cam does not return into the second state illustrated in FIG. 4 (b). In order to enable the drive cam to automatically return into the second state, in some embodiments, the socket is further provided with a return detection sensor. The return detection sensor is electrically and/or communicatively connected to the controller and disposed at the socket body 1 or the drive assembly. Specifically, the return detection sensor includes a pressure sensor disposed at the output shaft. Other types of sensors may also be applied herein.

In some embodiments, when a signal sent by the plug detection sensor 2 for the target object 4 to exit the open end of the socket inner cavity is received by the controller, a return state detection request is sent to the return detection sensor by the controller, and a return state of the driver 6 is detected by the return detection sensor in response to the return state detection request, and then the return state detection result is sent to the receiver module by the return detection sensor. The return state detection result sent by the return state detection sensor is received by the receiver module and sent to the controller, and a corresponding drive and control signal is sent to the drive mechanism 5 by the controller based on the return state detection result sent by the receiver module. The drive mechanism 5 switches the operation state based on the received drive and control signal to adjust the driver 6 into the second state.

In some embodiments, the socket includes a plurality of drive assemblies. The plurality of drive assemblies is arranged at intervals along a wall of the socket inner cavity to simultaneously exert forces with a same direction as the movement direction of the target object 4 on the target object 4 in several directions.

In order to avoid the target object 4 from not being well aligned with an interface formed at the bottom of the socket inner cavity due to a deviation of the target object 4 under the force of the drive assembly, a plurality of plug force assistance modules may be uniformly and circumferentially arranged at a side wall of the charging socket inner cavity in an annular array of one row and a plurality of columns, and an axis of the annular array is coincident with an axis of the socket inner cavity.

In order to further reduce the load that the arms need to bear when the user inserts the target object 4 into the socket or pulls the target object 4 out of the socket, an annular array of several rows and several columns may also be used herein. The force exerted on the target object 4 increases as the number of driving assemblies in the annular array increases. In this way, the load that the arms need to bear when the user inserts the target object 4 into the socket or pulls the target object 4 from the socket is smaller. Automatic insertion and pulling can be achieved by adjusting the number, arrangement and the provided force of the drive assemblies.

It should be noted that the above-mentioned examples are merely used to describe the embodiments of the present disclosure, and should not be construed as limiting the scope of the embodiments of the present disclosure, and sensors of other types may also be used herein.

Embodiments of the present disclosure further provide a charging pile. The charging pile includes a charging gun and a charging socket. The charging socket is the socket with the plug assistance function according to the above-mentioned embodiments.

Embodiments of the present disclosure further provide a vehicle. The vehicle includes a charging socket. The charging socket is the socket with the plug assistance function according to the above-mentioned embodiments.

With the socket with the plug assistance function, the vehicle, and the charging pile that are disclosed by the above-mentioned embodiments of the disclosure, it can be understood that the embodiments of the present disclosure have the following beneficial effects.

1. The socket with the plug assistance function according to the embodiments of the present disclosure includes the socket body 1, the plug detection sensor 2, the in-position detection sensor 3, the receiver module, the drive assembly, and the controller. The plug detection sensor 2, the in-position detection sensor 3, the receiver module, the drive assembly, and the controller are all disposed at the socket body 1. The socket can allow, without any modification to the target object 4 (e.g., a national standard charging gun head), the user to drag the target object 4 to be inserted into and exit the socket inner cavity more conveniently and effortlessly. In this way, the function of assisting in the insertion and pulling of the target object 4 is realized. As a result, the universality is extremely high.

2. The socket with the plug assistance function according to the embodiments of the present disclosure can assist the target object in being inserted into or pulled out of the socket inner cavity. In a case where the weight of the target object 4 is large and the user's arms need to bear the large load, the target object 4 can be inserted into and exit the socket inner cavity automatically or with the smaller insertion or pulling force, which greatly improves user experience.

Sequence numbers of the embodiments of the present disclosure are merely for description, and do not represent advantages and disadvantages of the embodiments.

In the description of the present disclosure, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A socket with plug assistance function, comprising:
a socket body (1), the socket body (1) being a base having a socket inner cavity;
a receiver module configured to receive an entering signal or an exit signal sent by a plug detection sensor (2), an in-position signal sent by an in-position detection sensor (3), and a request signal sent by a request trigger module for a target object (4) to exit the socket inner cavity;
a controller configured to output a corresponding drive and control signal based on a signal sent by the receiver module, and
a drive assembly configured to adjust an operation state based on the drive and control signal to drive the target object (4) to enter or exit the socket inner cavity, wherein:
the plug detection sensor (2) is configured to detect a signal for the target object (4) to enter or exit an open end of the socket inner cavity;
the in-position detection sensor (3) is configured to detect a signal for the target object (4) to be inserted to a predetermined position in the socket inner cavity;
the request trigger module is configured to receive a request signal for the target object (4) to exit the socket inner cavity; and
each of the receiver module, the drive assembly, and the controller is disposed at the socket body (1), and each of the receiver module and the drive assembly is electrically connected to the controller.

2. The socket according to claim 1, further comprising the plug detection sensor (2) disposed at the socket body (1) and electrically and/or communicatively connected to the receiver module.

3. The socket according to claim 2, wherein the plug detection sensor (2) comprises an optocoupler sensor disposed at an inner side wall of the socket inner cavity and located close to the open end of the socket inner cavity.

4. The socket according to claim 1, further comprising the in-position detection sensor (3) disposed at the socket body (1) and electrically and/or communicatively connected to the receiver module.

5. The socket according to claim 4, wherein the in-position detection sensor (3) comprises a contact signal switch disposed at a bottom of the socket inner cavity.

6. The socket according to claim 1, further comprising the request trigger module disposed at the socket body (1) and electrically and/or communicatively connected to the receiver module.

7. The socket according to claim 1, wherein the drive assembly comprises a drive mechanism (5) and a driver (6), wherein:
the drive mechanism (5) is electrically connected to the controller and in transmission connection with the driver (6) through an output shaft; and
the driver (6) has a first state in which the driver (6) protrudes into the socket inner cavity and a second state in which the driver (6) does not protrude into the socket inner cavity, the driver (6) being configured to be driven by the drive mechanism (5) to be switchable between the first state and the second state.

8. The socket according to claim 7, further comprising a mounting through hole formed at a side wall of the socket inner cavity, wherein:
the driver (6) is totally or partially received in the mounting through hole; and
the drive mechanism (5) is disposed at an outer side wall of the socket inner cavity.

9. The socket according to claim 7, wherein the drive mechanism (5) comprises a pneumatic motor, a hydraulic motor, and an electric motor.

10. The socket according to claim 7, wherein the driver (6) comprises a drive cam.

11. The socket according to claim 7, wherein a movement distance of the target object (4) in the socket inner cavity is an integer multiple of a single movement distance of the target object (4) in the first state.

12. The socket according to claim 7, further comprising a return detection sensor electrically and/or communicatively connected to the controller and disposed at the socket body (1) or the drive assembly.

13. The socket according to claim 12, wherein the return detection sensor comprises a pressure sensor disposed at the output shaft.

14. The socket according to claim 13, wherein:
the receiver module is further configured to receive a return state detection result sent by the return state detection sensor;
the controller is further configured to send a corresponding drive and control signal to the drive mechanism (5) based on the signal sent by the plug detection sensor (2) for the target object (4) to exit the open end of the socket inner cavity (1), a return state detection request sent to the return detection sensor, and the return state detection result; and
the drive mechanism (5) is capable of switching the operation state based on the received drive and control signal to adjust the driver (6) into the second state.

15. The socket according to claim 1, wherein the socket comprises a plurality of drive assemblies arranged at intervals along a side wall of the socket inner cavity.

16. A vehicle, comprising:
a charging socket, wherein the charging socket is the socket according to any one of claims 1 to 15.

17. A charging pile, comprising:
a charging socket, wherein the charging socket is the socket according to any one of claims 1 to 15.
